# EUROPEAN PATENT SPECIFICATION

(11) **EP 4 257 929 B1**
(45) Date of publication and mention of the grant of the patent: **21.08.2024**
(21) Application number: 22166892.4
(22) Date of filing: 06.04.2022
(51) Int. Cl.: G01D 5/14, G01P 3/481

(54) **PHYSICAL QUANTITY MEASUREMENT SYSTEM AND/OR POSITION MEASUREMENT WITH BISTABLE MAGNETIC WIRE, METHOD OF MEASUREMENT**
SYSTEM ZUR MESSUNG EINER PHYSIKALISCHEN GRÖSSE UND/ODER POSITIONSMESSSYSTEM MIT BISTABLEM MAGNETDRAHT SOWIE MESSVERFAHREN
SYSTÈME DE MESURE DE GRANDEUR PHYSIQUE ET/OU DE MESURE DE POSITION A FIL MAGNÉTIQUE BISTABLE, PROCÉDÉ DE MESURE

(43) Date of publication of application: 11.10.2023
(73) Proprietor: RVmagnetics, a.s., 042 18 Kosice (SK)
(72) Inventor: Varga, Rastislav, 04421 Hodkovce (SK)
(74) Representative: Litváková a spol., s.r.o.

(56) References cited:
- GB-A- 2 071 336
- GB-A- 2 073 428
- US-A- 6 084 400
- ZHUKOVA VALENTINA ET AL: "Review of Domain Wall Dynamics Engineering in Magnetic Microwires", NANOMATERIALS, vol. 10, no. 12, 1 December 2020 (2020-12-01), pages 2407, XP093135727, ISSN: 2079-4991, DOI: 10.3390/nano10122407

## Description

### Technical Field

The invention relates to a composition of excitation element and a bistable magnetic wire, where a composition is prepared for measuring of various physical quantities and/or for position measurement of the bistable magnetic wire. The novelty of the system and method lies mainly in the specific asymmetrical position of a magnetic field of the excitation element and the actually bistable magnetic wire, thanks to which the interpretive value of the raw measured data is significantly improved.

### Background Art

The bistable magnetic elements are used for measurement various physical quantities and position, where the bistable magnetic element is formed by a passive member which by its magnetization reacts to a change in position in the magnetic field or to a change in a physical quantity.

An alloy with bistable magnetic properties and a micro wire from this alloy is described, for example, in document GB2374084A. The micro wire is able to respond to various physical quantities, but response evaluation is problematic, because prior art bistable magnetic elements can have complex magnetic acts where the magnetization occurs in a multiple domains within a single micro wire, not a single wall jump. Applications of bistable magnetic wires in position measurement, angular measurement and revolution measurement are also known.

The excitation of a bistable magnetic wire that is wound up on a core, is clarified in document US4484090A. The solution does not allow to evaluate physical quantities. Some magnetic acts of a bistable magnetic element are described in document JPH03252577A, which, however does not solve the problems with the interpretation of the measured nonlinear values.

DE2817169A1, DE3427582A1, SU1753425A1 describe systems with a Wiegand wire having a certain level of magnetic bistability, wherein these systems serve to determine the approximation of a bistable magnetic element to a sensor. Due to this arrangement, it is not possible for measurement the values of physical quantities in the vicinity of the bistable magnetic element.

The position sensor or rotation sensor according to publication EP0484716A1 uses the Wiegand wire to which rotating permanent magnets approach. The sensor responds only to changes of the magnetic field, it does not evaluate the size of physical quantities.

The Wiegand sensor according to document DE4107847C1 allows to contactlessly transfer the information about closure of the switch, which can react to the change in a physical quantity such as temperature, pressure, acceleration, but it requires an appropriate sensor by which subsequently the switch is controlled, i. e. the physical quantity is not measured by the bistable magnetic element itself.

Publication GB2071336A describes a magnetic induction-type position encoder and displacement detector contains two electrical windings and a bistable magnetic element, such as a Wiegand wire, which couples these two windings magnetically. The periodic change in polarity induces in the second winding a periodic train of electrical voltage pulses, the phase of which relative to the exciter signal can be influenced in relation to position by moving permanent magnets closer to or further away from the bistable magnetic element.

A new technical solution is desired and not known which with simple construction, will improve the repeatable interpretability of the measurement of various physical quantities, wherein eliminating noise and the influence of secondary phenomena. The bistable magnetic element itself has to react to the changes in the measured physical quantity and also generate a response, which is contactlessly transmitted to the receiving element.

### Nature of Invention

Said shortcomings are substantially eliminated by a system for measuring a physical quantity and/or for position measurement with bistable magnetic wire, as defined in claim 1.

The terms first and second in this document are used to name two ends differently, and these are interchangeable, thus the terms first and second does not express the superiority or importance of the respective end of the bistable magnetic wire.

The different magnetic field at the ends in given moment of excitation leads to an asymmetric magnetic field, which, together with magnetization by a single Barkhausen jump, leads to repeatable interpretable measurement results. For practical measuring applications, it is important that the behavior of the bistable magnetic wire is influenced fundamentally by the measured quantity or measured position, and that other factors, including acts of more complex magnetic properties of the bistable magnetic wire, were negligible or at least identifiable in a way that allows correction when evaluating raw data.

To ensure the asymmetry of the mutual position of the excitation field and the bistable magnetic wire, a difference of 5 %, preferably 10 %, especially preferably more than 25 % in the values of the magnetic field at the first end and at the second end is sufficient. This contributes to the magnetization taking place in one jump within the entire wire from one end to the other. If the magnetization took place within a number of separate domains along the length of the wire, the measured response would include a number of individual acts, which significantly impairs the interpretability of the measurement. It is not possible to subsequently identify the dependence of the measured data, which reduces the application possibilities of the bistable magnetic wire. The aim of this invention is to achieve effective, thus complete, real bistability of magnetization, where the domain structure of the bistable magnetic wire does not consist of many domains, which would otherwise lead to magnetization by movement of multiple domains within a single wire. The measurement of a bistable magnetic wire with multiple domains along its length can be compared to the measurement of several separate bistable magnetic wires in a single excitation field, what causes that the resulting measurement is a sum of individual responses that cannot be reliably identified and the summary response vector is therefore practically unusable.

Several technical possibilities can be used to create relatively asymmetrical magnetic field, wherein the appropriate choice of the respective construction will also depend on the specific measured quantity or position. In principle, by system according to this invention the temperature, pressure / tension, magnetic field can be measured. From these basic quantities, a whole range of other physical quantities as well as various positional relationships can be measured indirectly, the presence of bistable magnetic wires can be measured, their mutual position, electric current parameters can be measured by measuring the magnetic field at the conductor, position and linear feed in the earth's magnetic field or bending and torsional stress or flow of liquid or gas based on the measurement of elongation in the respective direction can be measured.

The measurement of changes in the magnetic field allows to detect a change in position, a change in the rotation of the bistable magnetic wire or the carrier on which the bistable magnetic wire is mounted, and also allows to measure the relative position with respect to another object carrying the excitation element. On this basis, it is possible to construct position sensors, rotation sensors, end sensors, sensors of proximity of a magnetic object or carrier with a magnetic object, sensors of absolute position with respect to earth's magnetic field, and the like.

The antenna of the excitation element may be used for measurement the response, or preferably the system comprises a separate receiving element, for example in the form of a receiving coil. In this case, the excitation element may be a primary coil, and the receiving element will be formed by a secondary coil. The secondary coil can be connected to an amplifier and an evaluation unit. The receiving element may be located coaxially with the position of the bistable magnetic wire or may be in another position mutual to each other so as to be within range to allow for response to be received.

It is suitable embodiment where the bistable magnetic wire is in the form of a micro wire with a diameter less than 50 µm, preferably less than 25 µm, especially preferably less than 15 µm. It is precisely at core diameters less than 15 µm and with suitable composition of the amorphous metal alloy, the radial magnetic structure disappears, which is related to the process of wire drawing with simultaneous rapid cooling, usually water cooling. Thanks to that the bistable magnetic wire behaves as fully bistable, thus effectively bistable over the entire length of the wire, and the domain wall during magnetization runs from the first end to the second end, not separately within several individual zones along the length of the wire. It has also been found suitable if the length of the bistable magnetic wire is at least 100 times, preferably at least 10000 times larger than the diameter of the bistable magnetic wire, which implies that it will be a small diameter wire, which we can also call micro wire.

A typical construction of the bistable magnetic wire includes an amorphous metal core and a cover, for example glass cover, whose outer diameter is no larger than three times the diameter of the metal core. The thickness of the glass cover can range 1 to 20 µm. The glass cover, glass surface layer, protects the metal core from electrical contact with the environment, from aggressive chemical environment, thanks to which the bistable magnetic wire can be used very universally, for example directly in the electric motor windings or inside of building materials, inside of human body and the like. In principle, it is also possible to use a bistable magnetic wire without a circumferential cover, or it is also possible to use the cover of a different material than glass.

A magnetic excitation with a triangle-shaped amplitude waveform , usually with a symmetrical triangle-shaped amplitude waveform, which simplifies the evaluation of measured signal as described in older publications of the authors of this invention, has proven to be suitable. With this aim, the system according to this invention is adjusted to be connected to a power element, a control element and an evaluation element. According to the instruction from the control element, the power element transmits to the excitation element a power supply regulated to obtain an excitation signal of triangle-shaped amplitude waveform. The evaluation element acquires and analyzes the response received from the bistable magnetic wire.

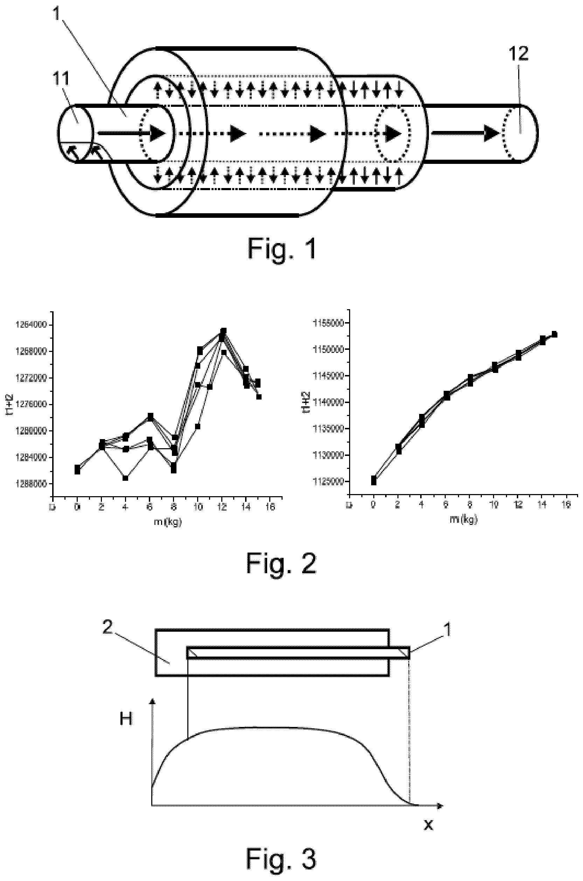

The asymmetry of the excitation field can be achieved in such a way that the excitation element, which induces a substantially symmetrical field, is arranged relatively asymmetrically with respect to the bistable magnetic wire. As shown in Figure 3, positional asymmetry ensures that the first end of the bistable magnetic wire is in a higher magnetic field than the second end, and therefore the bistable magnetic wire will be magnetized always with movement of one domain wall, the one which is in the higher field. Positional asymmetry can be achieved by setting a spatial relationship. At the same time, the coil of the excitation element and the bistable magnetic wire can be arranged coaxially, thus with identical or parallel-oriented longitudinal axes.

The asymmetry of the excitated magnetic field can be ensured by the construction of the excitation element with an uneven coil winding, for example with different thread pitches or with different number of threads at the first end or at the second end. The result of such a construction of the excitation element is a different amplitude of the magnetic field at the ends of the excitation element, or at a certain distance from these ends. In such a case, the mutual position of the excitation element and the bistable magnetic wire may be spatially symmetrical, but at the first end and at the second end of the bistable magnetic wire, it will be in a magnetic field of different amplitude.

The definition describing the mutual position of the excitation element and the bistable magnetic wire according to the first claim also includes a symmetrical mutual position if an asymmetrical magnetic field is generated by the excitation element. The definition of the first claim expresses a mutual arrangement, which can be achieved by several means, or by a different combination of technical means and relative spatial arrangement. The asymmetry of the magnetic field important to achieving the effects according to this invention is always understood in the relative relationship of the amplitudes of the magnetic field at the first end and at the second end. The asymmetry of the excited magnetic field can also be achieved by adding a shielding element or by placing another, secondary coil to the primary coil to the primary coil of the excitation element. In such a case, the mutual position of the excitation element and the bistable magnetic wire may also appear to be spatially symmetrical, but the asymmetry of the magnetic field at the first end and at the second end will be important.

In all versions of the asymmetry of the magnetic field, the excitation element can be placed coaxially with the position of the bistable magnetic wire or can be placed next to the bistable magnetic wire. In most applications, it is assumed that the longitudinal axis of the magnetic field generated by the excitation element will be essentially parallel to the longitudinal axis of the bistable magnetic wire, but in principle an angularly different position is also possible, for example, the longitudinal axis of the excitation element deviates from the longitudinal axis of the bistable magnetic wire within 30 degrees.

The disadvantages mentioned in the prior art are eliminated by the method for physical quantity measurement and/or for position measurement with the bistable magnetic wire, as defined in claim 13.

Defining the difference in the amplitude of the magnetic field at the ends should be explained by the fact that this difference applies in the static state, when the changing position of the bistable magnetic wire is not measured, even if the bistable magnetic wire can move with respect to the excitation element (e.g. when measuring the pressure in a rotating tire). This means that at the moment of magnetization, the ends of the bistable magnetic wire are in magnetic fields of different amplitudes.

In the case of measuring the changing position of the bistable magnetic wire, e. g. when measuring the linear position, again applies, that at the moment of magnetization, the ends of the bistable magnetic wire are in magnetic fields of different amplitudes, and at the same time there is a difference in the magnetic fields, due to the movement that is the subject of measurement.

At the same time, it is preferable, if the magnetic field has a triangle-shaped amplitude waveform, especially preferably a symmetrical triangle-shaped amplitude waveform, and the time of the local maximum and the time of the local minimum of response of the bistable magnetic wire are evaluated, which are essentially the time points of magnetization of the bistable magnetic wire. The sum of these times is a parameter that expresses the dependence of the measured quantity or position, wherein other unmeasured factors and noise are suppressed. This improves the interpretability of the measured data and also accelerates their evaluation. It is also suitable if the difference between these times is calculated and this parameter expresses the parasitic magnetic field, which interferes the measurement of conventional magnetic sensors. The process according to this invention suppresses the effects of the parasitic magnetic field.

An important feature of both the system and the method according to this invention is the fact that in the evaluation of the response signal, the local maximums and minimums are searched, and after their recognition, we work with times T1, T2, at which these maximums and minimums were measured. Furthermore, the method does not work on the basis of the values of the measured amplitudes, as was common in the prior art, but works with the values of the times, which is an easily and clearly identifiable parameter in the received signals. Thanks to that evaluation fast, accurate and insensitive to various secondary effects. For example, the exact position, shape and size of the excitation and sensing elements are not important.

In the development of the subject of the invention, it has been shown that a bistable magnetic wire has a different reactivity per measured quantity according to the frequency of the excitation field. In a preferable arrangement, therefore, the method according to this invention comprises the step of exciting the magnetic field with a different or varying frequency according to the type of measured quantity or position. The universal excitation generator as well as the excitation element will optionally be adapted to this, or various excitation elements will be used for various applications. Thank to this finding, one construction of the bistable magnetic wire can also be used at different frequencies. The stable frequency value for one application may differ from the stable frequency used in another application, or these frequencies may be variable in a range different for the particular type of measurement.

A significant advantage of the present invention is the repeatable accuracy of the measurements, which is related to the increase of the interpretation level of the obtained raw data. A rapid response to a change in the measured physical quantity was also demonstrated. Thanks to the small dimensions of the bistable magnetic wire, the low cost and its energetic passivity, the system according to this invention can be used in a wide range of technical applications.

### Description of Figures

The invention is explained in more detail using figures 1 to 10. The particular sizes of the wire, the excitation element shown and also the values of measured quantities shown are only examples, which should not be explained as a narrowing of the required protection of the invention.
Figure 1 is a block schematic representation of the structure of the bistable magnetic wire.
Figure 2 represents the results of bending stress measurement on a steel bracket, where on the left are the results of measurements with a classically bistable magnetic wire from the prior art and on the right are the results of measurements with the bistable magnetic wire according to the invention. Figure 2 clarifies the solved technical problem, which occurs in prior art solutions.
Figure 3 schematically shows the positional asymmetry of the excitation element to the bistable magnetic wire.
Figure 4 schematically explains the asymmetrically wound coil of excitation element.
Figure 5 shows system for tension measurement in a test tear sample.
Figure 6 schematically shows the system for measuring the temperature on the surface of a battery cell. Subsequently, figure 7 shows the dependence of the temperature course on the sum of times T1 + T2.
Figure 8 shows an oscilloscope screen with peak time values aT1 - T2 to cT1 - cT2 when measuring temperature with three bistable magnetic wires.
Figure 9 shows the coaxial position of the bistable magnetic wire with respect to the excitation element and the sensing element when measuring the linear position of the piston.
Figure 10 shows the magnetization of the bistable magnetic wire between two states when excited by a triangle-shaped amplitude waveform .

### Examples of Embodiments

### Example 1

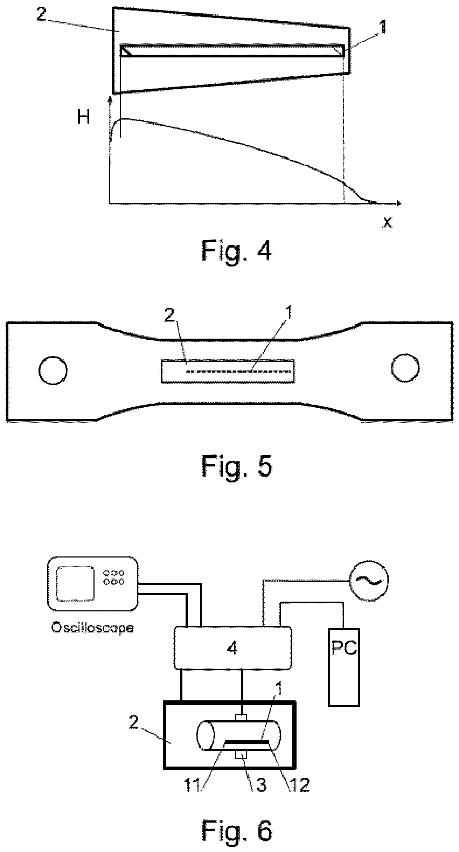

In this example according to figures 3 and 5, the bistable magnetic wire 1 is used for measurement the tension, or the pressure in the steel part. The tear pattern has a calibrated center zone and two clamping ends. A micro wire with a metal core diameter of approx. 15 µm and with glass cover with a total diameter of approx. 45 µm with a length of approximately 3 cm are glued to the surface in the central zone. In this example, the bistable magnetic wire 1 is oriented in the direction of the tension force, wherein the elongations of the steel material are transmitted to the deformation of the bistable magnetic wire 1. Slight mounting angular position deviations do not have a significant effect on the measurement accuracy. The bistable magnetic wire 1 is at the same time essentially aligned in a straight line, where the first end 11 and the second end 12 are in a mutual opposite position, so that the bistable magnetic wire 1 is not wound on the core, as known from prior art applications.

An important feature of this example is the creation of the asymmetry of the excitated magnetic field using positional asymmetry. The excitation element 2 is placed next to the bistable magnetic wire 1, the longitudinal axis of the excitation element 2 is essentially parallel to the longitudinal axis of the bistable magnetic wire 1, wherein the center of the coil of the excitation element 2 is moved with respect to the center of the bistable magnetic wire 1 by the value X recorded in figure 6. In order to ensure a small distance between the excitation element 2 and the bistable magnetic wire 1, the longitudinal axis of the excitation element 2 and the longitudinal axis of the bistable magnetic wire 1 are placed in a position, where if we intersect one common plain through them, this common plain is essentially perpendicular to the surface of the steel part. However, in principle the measuring system is insensitive to the inaccuracies of the placement of the individual elements, it is only essential, that the elongations of the measured material are reliably transferred to the bistable magnetic wire 1.

The positional asymmetry of the excitation element 2 leads to the desired difference of the magnetic field at the first end 11 and at the second end 12, which together with the properties of the bistable magnetic wire 1 leads to magnetization by a single Barkhausen jump from the first end 11 to the second end 12. The excitation element 2 generates a magnetic field with a triangle-shaped amplitude waveform and the response of the bistable magnetic wire 1 is captured with a sensor element 3, which is connected to the control unit 4, where the response is evaluated.

Static and dynamic measurement take place on a tear machine. The signal obtained in the sensing element 3 is overall monotonic and with a high repeated accuracy.

### Example 2

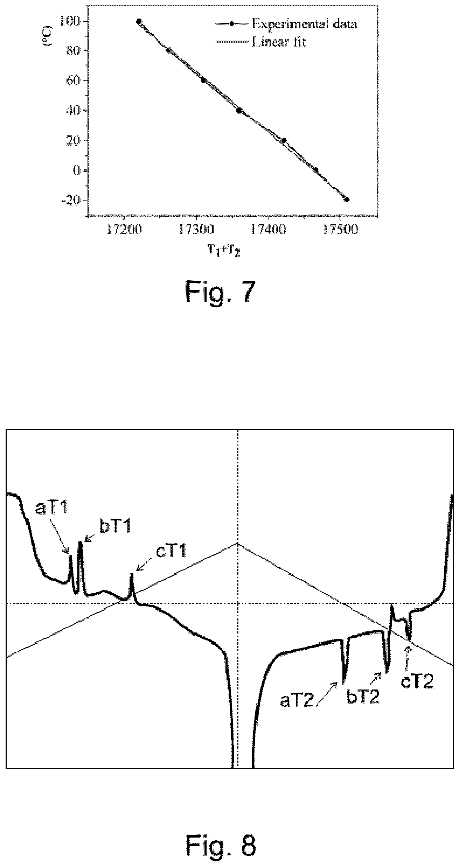

For measurement the temperature of the cylinder battery cell according to figures 6 and 7 a heat-sensitive bistable magnetic wire 1 is placed on the cell surface. The system also comprises a planar coil of the excitation element 2 and a smaller coil of the sensing element 3. The measurement was performed in the temperature range from -20 to +100 °C.

The analog signal from the bistable magnetic wire 2 in the form of two peaks (minimum and maximum) is monitored by an oscilloscope. The position time of the signal peaks T1 (maximum) and T2 (minimum) is processed and transformed into a digital signal in the control unit 4 and is subsequently displayed on the PC. The measured and evaluated signal shows an almost linear dependence between the temperature and the magnetic response of the bistable magnetic wire 1, which is defined by the sum of the values T1 + T2. Subsequently, the parameters from the detected dependence were used to adjustment the parameters of the software that shows the actual temperature. In the case of a monotonic dependence, a calibration polynomial can be defined to be used to assign the raw data to the actual temperature. The sampling frequency is 2 samples/second with a sensitivity of 0.4 °C (K), which corresponds to a 288-point change at 120 ° C interval.

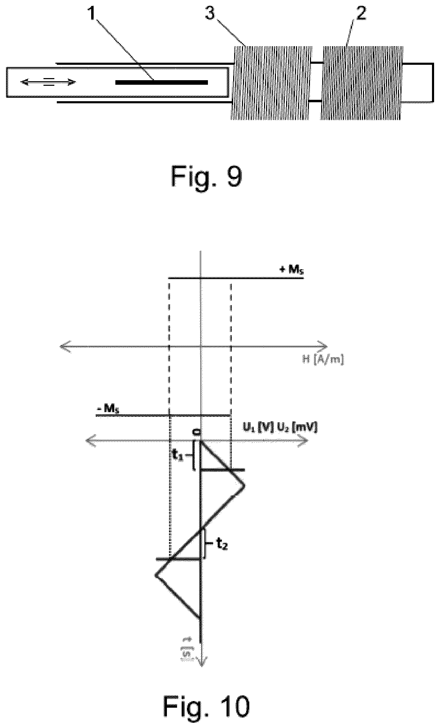

With one excitation element 2 and with one sensing element 3 it is possible to create a system for measuring the temperature of several battery cells. As can be seen in figure 9, it is possible to clearly distinguish the time positions of the signal peaks for the three bistable magnetic wires 1, which are individually placed on the three cylindrical battery cells. The peaks are marked as aT1 - aT2 to cT1 - cT2. The signal received in this way can be clearly detected, decomposed and transformed into the temperature of the individual battery cells.

### Example 3

One bistable magnetic wire 1, which is connected to a moving piston, is used for measurement the linear position with high accuracy. The bistable magnetic wire 1 in this example with the composition Fe_{77.5} Si_{7.5} B₁₅ has a positive magnetostriction, has a length of 30 mm, a metal core diameter of 39 µm and a diameter with the glass layer of 71 µm.

In this example according to figure 9, the excitation element 2 and the sensing element 3 are formed by coils, which loosely surround the sliding piston. The longitudinal axes of the excitation element 2, the sensing element 3 and the piston are identical. The bistable magnetic wire 1 is mounted on the surface of the piston, so it has only an approximately coaxial position with the excitation element 2 and the sensing element 3, which, however, does not affect the accuracy of the position measurement.

The asymmetry of the magnetic field in this example is achieved by positional asymmetry, wherein in each position of the piston the center of the bistable magnetic wire 1 is placed outside of the center of the excitation element 2. Moreover, in this example applies, that also both ends 11, 12 are in each position placed outside of the center of the excitation element 2. The position of the excitation element 2 is thus set so that at the end position of the piston, one end of the bistable magnetic wire 1 extends inside the coil of the excitation element 2, but does not reach the center of the excitation element 2. Subsequently, the piston with the bistable magnetic wire 1 extends even more from the inside of the coil of the excitation element 2.

Unlike conventional position sensors, where the position is defined by the magnetic permeability and amplitude of the signal on the sensing coil, the system according to this example detects the magnetization proportional to the position of the bistable magnetic wire 1.

A reliable induction method is used for detection of magnetization. The excitation field has a triangle-shaped amplitude waveform and the switching time is measured, where T1 and T2 express the magnetization time (positive and negative switching) between the two stable magnetic states according to figure 10. The switching time corresponds to the time when the maximum voltage is induced. The maximum and minimum of the received signal can be clearly identified, the background does not affect the interpretation possibilities. The correctly amplified and filtered sensed signal is connected to the digital input of a single-chip computer with a time resolution of within 10 ns. The simple electronics in the control unit 4 is sufficient to achieve very high accuracy and measurement speed. The digital unit of the microcontroller generates a PWM signal of the desired frequency, in this example 135 Hz. After filtering the received signal and transforming it, the times T1 + T2 are sum up by a timer.

The advantage of the system according to this example is the sharp maximum of the signal induced during the magnetization and the high sensitivity at the level of 10 µm. The system is also independent of the ambient temperature, the measurement error due to temperature sensitivity is less than 0.19%.

### Example 4

In this example according to figure 4, the coil of the excitation element 2 is wound unevenly so that it has an increased number of threads at one end. At the same time, the bistable magnetic wire 1 is positioned so that at a given time of non-zero excitation, the amplitude of the magnetic field excited by the excitation element 2 at the first end 11 is at least 5% different from the amplitude of the magnetic field excited by the excitation element 2 on the second end 12.

### Industrial applicability

The industrial applicability is obvious. According to this invention, it is possible to industrially and repeatedly manufacture and use the spatial and constructional arrangement of the excitation element and the bistable magnetic wire for measurement a physical quantity and/or for measuring a position, in particular for measurement of temperature, pressure, tension, magnetic field, electric current, position, earth's magnetic field, torsion, linear or angular position.

### List of reference marks

- 1: - bistable magnetic wire
11 - first end
12 - second end
- 2: - excitation element

- 3: - sensing element
- 4: - control unit

- T1: - maximum signal response time
- T2: - minimum signal response time

## Claims

1. A system for physical quantity measurement and/or for position measurement with a bistable magnetic wire, which comprises the bistable magnetic wire (1), an excitation element (2) adapted for creating a magnetic field in a range where the bistable magnetic wire (1) is placed, which has a first end (11) and an oppositely placed second end (12), wherein the bistable magnetic wire (1) is adjusted for magnetization by a single Barkhausen jump from the first end (11) to the second end (12) or vice versa, and which also comprises a sensing element (3) for response receiving from the bistable magnetic wire (1), wherein the excitation element (2) and the bistable magnetic wire (1) are placed in a position such that the amplitude of the magnetic field excited by the excitation element (2) at the first end (11) is different from the amplitude of the magnetic field excited by the excitation element (2) at the second end (12).

2. The system for physical quantity measurement and/or for position measurement with the bistable magnetic wire according to claim 1, **characterized in that,** the difference in amplitude of the magnetic field at the first end (11) and at the second end (12) is at least 5%, preferably at least 10 %.

3. The system for physical quantity measurement and/or for position measurement with the bistable magnetic wire according to claim 1 or 2, **characterized in that** it is adapted to measure temperature and/or pressure and/or tension and/or magnetic field and/or linear position.

4. The system for physical quantity measurement and/or for position measurement with the bistable magnetic wire according to any of the claims 1 to 3, **characterized in that** the coil of the receiving element (3) is separate from the coil of the excitation element (2).

5. The system for physical quantity measurement and/or for position measurement with the bistable magnetic wire according to any of the claims 1 to 4, **characterized in that** the bistable magnetic wire (1) has a diameter less than 50 µm, preferably less than 25 µm, especially preferably less than 15 µm.

6. The system for physical quantity measurement and/or for position measurement with the bistable magnetic wire according to any of the claims 1 to 5, **characterized in that** the bistable magnetic wire (1) is covered with a layer of insulating material, preferably with a layer of glass.

7. The system for physical quantity measurement and/or for position measurement with the bistable magnetic wire according to claim 6, **characterized in that** the glass has a thickness up to 20 µm.

8. The system for physical quantity measurement and/or for position measurement with the bistable magnetic wire according to any of the claims 1 to 7, **characterized in that** the length of the bistable magnetic wire (1) is at least 1000 times, preferably at least 10 000 times greater than the diameter of the metal core of the bistable magnetic wire (1).

9. The system for physical quantity measurement and/or for position measurement with the bistable magnetic wire according to any of the claims 1 to 8, **characterized in that** the excitation element (2) is placed asymmetrically to the position of the bistable magnetic wire (1).

10. The system for physical quantity measurement and/or for position measurement with the bistable magnetic wire according to any of the claims 1 to 9, **characterized in that** the excitation element (2) has an asymmetrical structure with different amplitude of magnetic fields at its ends.

11. The system for physical quantity measurement and/or for position measurement with the bistable magnetic wire according to claim 10, **characterized in that** the excitation element (2) is formed by a coil with a different winding density at the first end (11) and the second end (12).

12. The system for physical quantity measurement and/or for position measurement with the bistable magnetic wire according to any of the claims 1 to 11, **characterized in that** the longitudinal axis of the excitation element (2) is identical or parallel with the longitudinal axis of the bistable magnetic wire (1), or the longitudinal axis of the excitation element (2) deviates from the longitudinal axis of the bistable magnetic wire (1) within 30 degrees.

13. A method for physical quantity measurement and/or for position measurement with a bistable magnetic wire, wherein a variable magnetic field is transmitted by an excitation element (2), wherein at least one bistable magnetic wire (1) is placed within the range of the excited magnetic field, which is magnetized when the magnetic field changes by a single Barkhausen jump from the first end (11) to the second end (12) of the bistable magnetic wire or vice versa and where the response of the bistable magnetic wire (1) is subsequently sensed by a sensing element (3), wherein the excitation element (2) and the bistable magnetic wire (1) are maintained in a position such that the amplitude of the magnetic field excited by the excitation element (2) at the first end (11) is different from the amplitude of the magnetic field excited by the excitation element (2) at the second end (12).

14. The method for physical quantity measurement and/or for position measurement with the bistable magnetic wire according to claim 13, **characterized in that** the excitation magnetic field has a triangle-shaped amplitude waveform, preferably a symmetrical triangle-shaped, and the time (T1) of the local maximum and the time (T2) of the local minimum of response of the bistable magnetic wire (1) are evaluated.

15. The method for physical quantity measurement and/or for position measurement with the bistable magnetic wire according to claim 13 or 14, **characterized in that** the excitation magnetic field has a frequency in a range in which the bistable magnetic wire (1) has at least one local maximum of sensitivity for a particular type of measured quantity or position.

16. The method for physical quantity measurement and/or for position measurement with the bistable magnetic wire according to claim 14, **characterized in that** when evaluating the signal received as a response from the bistable magnetic wire (1), the sum of the time (T1) of local maximum and time (T2) of local minimum of signal are evaluated, preferably without taking into account the absolute amplitude of the signal.

17. The method for physical quantity measurement and/or for position measurement with the bistable magnetic wire according to claim 16, **characterized in that** when evaluating the signal received as response from the bistable magnetic wire (1), the difference of the time (T2) of the local minimum and the time (T1) of the local maximum of the signal is taken into account.

18. The method for physical quantity measurement and/or for position measurement with the bistable magnetic wire according to any of the claims 13 to 17, **characterized in that** the response of the bistable magnetic wire (1) intercepted in the sensing element (3) is evaluated in the control unit (4).

## Patentansprüche

1. System zur Messung einer physikalischen Größe und/oder zur Positionsmessung mit einem bistabilen Magnetdraht, umfassend einen bistabilen Magnetdraht (1), ein Anregungselement (2) zum Erzeugen eines Magnetfelds, in dessen Reichweite mindestens ein bistabiler Magnetdraht (1) angeordnet wird, der ein erstes Ende (11) und ein gegenüberliegendes zweites Ende (12) aufweist, wobei der bistabile Magnetdraht (1) zur Ummagnetisierung durch einen Barkhausen-Sprung vom ersten Ende (11) zum zweiten Ende (12) oder umgekehrt angepasst ist, und sowie umfassend Sensorelement (3) zum Empfangen der Reaktion von dem bistabilen Magnetdraht (1), wobei
das Anregungselement (2) und der bistabile Magnetdraht (1) in einer solchen Position angeordnet werden, dass die Amplitude des vom Anregungselement (2) angeregten Magnetfelds am ersten Ende (11) von der Amplitude des vom Anregungselement (2) angeregten Magnetfelds am zweiten Ende (12) sich unterscheidet.

2. System zur Messung einer physikalischen Größe und/oder zur Positionsmessung mit einem bistabilen Magnetdraht nach Anspruch 1, **dadurch gekennzeichnet, dass** der Unterschied der Amplitude des Magnetfelds am ersten Ende (11) und am zweiten Ende (12) mindestens 5 %, vorzugsweise mindestens 10 % beträgt.

3. System zur Messung einer physikalischen Größe und/oder zur Positionsmessung mit einem bistabilen Magnetdraht nach Anspruch 1 oder 2, **dadurch gekennzeichnet, dass** es für Messung von Temperatur und/oder Druck und/oder Spannung und/oder Magnetfeld und/oder linearer Position angepasst ist.

4. System zur Messung einer physikalischen Größe und/oder zur Positionsmessung mit einem bistabilen Magnetdraht nach einem der Ansprüche 1 bis 3, **dadurch gekennzeichnet, dass** die Spule des Empfangselements (3) von der Spule des Anregungselements (2) getrennt ist.

5. System zur Messung einer physikalischen Größe und/oder zur Positionsmessung mit einem bistabilen Magnetdraht nach einem der Ansprüche 1 bis 4, **dadurch gekennzeichnet, dass** der bistabile Magnetdraht (1) einen Durchmesser von weniger als 50 µm, bevorzugt weniger als 25 µm, besonders bevorzugt weniger als 15 µm aufweist.

6. System zur Messung einer physikalischen Größe und/oder zur Positionsmessung mit einem bistabilen Magnetdraht nach einem der Ansprüche 1 bis 5, **dadurch gekennzeichnet, dass** der bistabile Magnetdraht (1) mit einer Schicht aus isolierendem Material, bevorzugt mit einer Schicht aus Glas, umhüllt ist.

7. System zur Messung einer physikalischen Größe und/oder zur Positionsmessung mit einem bistabilen Magnetdraht nach Anspruch 6, **dadurch gekennzeichnet, dass** das Glas eine Dicke bis zu 20 µm aufweist.

8. System zur Messung einer physikalischen Größe und/oder zur Positionsmessung mit einem bistabilen Magnetdraht nach einem der Ansprüche 1 bis 7, **dadurch gekennzeichnet, dass** die Länge des bistabilen Magnetdrahtes (1) mindestens 1000-mal, bevorzugt mindestens 10.000-mal größer ist als der Durchmesser des Metallkerns des bistabilen Magnetdrahtes (1).

9. System zur Messung einer physikalischen Größe und/oder zur Positionsmessung mit einem bistabilen Magnetdraht nach einem der Ansprüche 1 bis 8, **dadurch gekennzeichnet, dass** das Anregungselement (2) asymmetrisch zur Position des bistabilen Magnetdrahtes (1) angeordnet ist.

10. System zur Messung einer physikalischen Größe und/oder zur Positionsmessung mit einem bistabilen Magnetdraht nach einem der Ansprüche 1 bis 9, **dadurch gekennzeichnet, dass** das Anregungselement (2) einen asymmetrischen Aufbau mit unterschiedlicher Amplitude der Magnetfelder an seinen Enden aufweist.

11. System zur Messung einer physikalischen Größe und/oder zur Positionsmessung mit einem bistabilen Magnetdraht nach Anspruch 10, **dadurch gekennzeichnet, dass** das Anregungselement (2) durch eine Spule mit unterschiedlicher Wicklungsdichte am ersten Ende (11) und am zweiten Ende (12) gebildet ist.

12. System zur Messung einer physikalischen Größe und/oder zur Positionsmessung mit einem bistabilen Magnetdraht nach einem der Ansprüche 1 bis 11, **dadurch gekennzeichnet, dass** die Längsachse des Anregungselements (2) identisch oder parallel zur Längsachse des bistabilen Magnetdrahts (1) ist, oder die Längsachse des Anregungselements (2) in einem Winkel von bis zu 30 Grad von der Längsachse des bistabilen Magnetdrahts (1) abweicht.

13. Verfahren zur Messung einer physikalischen Größe und/oder zur Positionsmessung mit einem bistabilen Magnetdraht, wobei ein variables Magnetfeld von einem Anregungselement (2) gesendet wird, wobei in der Reichweite des angeregten Magnetfelds mindestens ein bistabiler Magnetdraht (1) angeordnet wird, der bei einer Änderung des Magnetfeldes durch einen Barkhausen-Sprung vom ersten Ende (11) zum zweiten Ende (12) des bistabilen Magnetdrahtes oder umgekehrt ummagnetisiert wird, und wo die Reaktion des bistabilen Magnetdrahts (1) anschließend von einem Sensorelement (3) erfasst wird, wobei
das Anregungselement (2) und der bistabile Magnetdraht (1) in einer solchen Position gehalten werden, dass die Amplitude des vom Anregungselement (2) angeregten Magnetfelds am ersten Ende (11) von der Amplitude des vom Anregungselement (2) angeregten Magnetfelds am zweiten Ende (12) sich unterscheidet.

14. Verfahren zur Messung einer physikalischen Größe und/oder zur Positionsmessung mit einem bistabilen Magnetdraht nach Anspruch 13, **dadurch gekennzeichnet, dass** das Anregungsmagnetfeld einen dreieckigen Amplitudenverlauf, bevorzugt von einer symmetrischen Dreiecksform, aufweist und die Zeit (T1) des lokalen Maximums und die Zeit (T2) des lokalen Minimums der Reaktion des bistabilen Magnetdrahtes (1) ausgewertet werden.

15. Verfahren zur Messung einer physikalischen Größe und/oder zur Positionsmessung mit einem bistabilen Magnetdraht nach Anspruch 13 oder 14, **dadurch gekennzeichnet, dass** das Anregungsmagnetfeld eine Frequenz in dem Bereich aufweist, in dem der bistabile Magnetdraht (1) mindestens ein lokales Maximum der Empfindlichkeit für gegebene Art von Messgröße oder Position aufweist.

16. Verfahren zur Messung einer physikalischen Größe und/oder zur Positionsmessung mit einem bistabilen Magnetdraht nach Anspruch 14, **dadurch gekennzeichnet, dass** bei der Auswertung des als Reaktion vom bistabilen Magnetdraht (1) empfangenen Signals die Summe der Zeit (T1) des lokalen Maximums und der Zeit (T2) des lokalen Minimums des Signals ausgewertet wird, vorzugsweise ohne Berücksichtigung der absoluten Amplitude des Signals.

17. Verfahren zur Messung einer physikalischen Größe und/oder zur Positionsmessung mit einem bistabilen Magnetdraht nach Anspruch 16, **dadurch gekennzeichnet, dass** bei der Auswertung des als Reaktion vom bistabilen Magnetdraht (1) empfangenen Signals die Differenz der Zeit (T2) des lokalen Minimums und der Zeit (T1) des lokalen Maximums des Signals berücksichtigt wird.

18. Verfahren zur Messung einer physikalischen Größe und/oder zur Positionsmessung mit einem bistabilen Magnetdraht nach einem der Ansprüche 13 bis 17, **dadurch gekennzeichnet, dass** die im Sensorelement (3) erfasste Reaktion des bistabilen Magnetdrahtes (1) in der Steuereinheit (4) ausgewertet wird.

## Revendications

1. Système de mesure d'une grandeur physique et/ou de mesure d'une position avec un fil magnétique bistable, qui comprend un fil (1) magnétique bistable, un élément (2) d'excitation adapté pour créer un champ magnétique à la portée duquel est placé un fil (1) magnétique bistable qui possède une première extrémité (11) et une seconde extrémité (12) positionnée de manière opposée, dans lequel le fil (1) magnétique bistable est adapté pour être remagnétisé par un saut de Barkhausen à partir de la première extrémité (11) à la seconde extrémité (12) ou inversement, et qui comprend également un élément (3) de détection pour recevoir une réponse du fil (1) magnétique bistable,
dans lequel
l'élément (2) d'excitation et le fil (1) magnétique bistable sont placés dans une position telle que l'amplitude du champ magnétique induit par l'élément (2) d'excitation à la première extrémité (11) est différente de l'amplitude du champ magnétique induit par l'élément (2) d'excitation à la seconde extrémité (12).

2. Système de mesure d'une grandeur physique et/ou de mesure d'une position avec un fil magnétique bistable selon la revendication 1, **caractérisé en ce que** la différence d'amplitude du champ magnétique à la première extrémité (11) et à la seconde extrémité (12) est d'au moins 5 %, avantageusement d'au moins 10 %.

3. Système de mesure d'une grandeur physique et/ou de mesure d'une position avec un fil magnétique bistable selon la revendication 1 ou 2, **caractérisé en ce qu'il** est adapté pour mesurer la température et/ou la pression et/ou la traction et/ou le champ magnétique et/ou la position linéaire.

4. Système de mesure d'une grandeur physique et/ou de mesure d'une position avec un fil magnétique bistable selon l'une quelconque des revendications 1 à 3, **caractérisé en ce que** la bobine de l'élément (3) de réception est une bobine de l'élément (2) d'excitation.

5. Système de mesure d'une grandeur physique et/ou de mesure d'une position avec un fil magnétique bistable selon l'une quelconque des revendications 1 à 4, **caractérisé en ce que** le diamètre du fil (1) magnétique bistable est inférieur à 50 µm, avantageusement inférieur à 25 µm, et plus avantageusement inférieur à 15 µm.

6. Système de mesure d'une grandeur physique et/ou de mesure d'une position avec un fil magnétique bistable selon l'une des revendications 1 à 5, **caractérisé en ce que** fil (1) magnétique bistable est recouvert d'une couche de matériau isolant, avantageusement d'une couche de verre.

7. Système de mesure d'une grandeur physique et/ou de mesure d'une position avec un fil magnétique bistable selon la revendication 6, **caractérisé en ce que** l'épaisseur de verre allant jusqu'à 20 µm.

8. Système de mesure d'une grandeur physique et/ou de mesure d'une position avec un fil magnétique bistable selon l'une quelconque des revendications 1 à 7, **caractérisé en ce que** la longueur du fil (1) magnétique bistable est au moins 1 000 fois, avantageusement au moins 10 000 fois supérieure au diamètre du noyau métallique du fil (1) magnétique bistable.

9. Système de mesure d'une grandeur physique et/ou de mesure d'une position avec un fil magnétique bistable selon l'une quelconque des revendications 1 à 8, **caractérisé en ce que** l'élément (2) d'excitation est disposé de manière non symétrique par rapport à la position du fil (1) magnétique bistable .

10. Système de mesure d'une grandeur physique et/ou de mesure d'une position avec un fil magnétique bistable selon l'une quelconque des revendications 1 à 9, **caractérisé en ce que** l'élément (2) d'excitation présente une structure asymétrique avec amplitudes différentes de champs magnétiques à ses extrémités.

11. Système de mesure d'une grandeur physique et/ou de mesure d'une position avec un fil magnétique bistable selon la revendication 10, **caractérisé en ce que** l'élément (2) d'excitation est composé d'une bobine avec une densité d'enroulement différente à la première extrémité (11) et à la seconde extrémité (12).

12. Système de mesure d'une grandeur physique et/ou de mesure d'une position avec un fil magnétique bistable selon l'une quelconque des revendications 1 à 11, **caractérisé en ce que** l'axe longitudinal de l'élément (2) d'excitation est identique ou parallèle à l'axe longitudinal du fil (1) magnétique bistable, ou l'axe longitudinal de l'élément (2) d'excitation s'écarte de l'axe longitudinal du fil (1) magnétique bistable jusqu'à 30 degrés.

13. Méthode de mesure d'une grandeur physique et/ou de mesure d'une position avec un fil magnétique bistable, dans laquelle l'élément (2) d'excitation émet un champ magnétique variable, dans laquelle au moins un fil (1) magnétique bistable est disposé à la portée du champ magnétique excité, et qui, lorsque le champ magnétique change, est remagnétisé par un saut de Barkhausen de la première extrémité (11) à la seconde extrémité (12) du fil magnétique bistable ou inversement et où la réponse du fil (1) magnétique bistable est par la suite détectée par l'élément (3) de détection, dans laquelle
l'élément (2) d'excitation et le fil (1) magnétique bistable sont maintenus dans une position telle que l'amplitude du champ magnétique induit par l'élément (2) d'excitation à la première extrémité (11) est différente de l'amplitude du champ magnétique induit par l'élément (2) d'excitation à la seconde extrémité (12).

14. Méthode de mesure d'une grandeur physique et/ou de mesure d'une position avec un fil magnétique bistable selon la revendication 13, **caractérisé en ce que** le champ magnétique d'excitation présente une forme d'onde à amplitude triangulaire, avantageusement triangulaire symétrique, et le temps (T1) du maximum local et le temps (T2) du minimum local de la réponse du fil (1) magnétique bistable sont évalués.

15. Méthode de mesure d'une grandeur physique et/ou de mesure d'une position avec un fil magnétique bistable selon la revendication 13 ou 14, **caractérisé en ce que** le champ magnétique d'excitation a une fréquence dans la plage dans laquelle le fil (1) magnétique bistable a au moins un maximum de sensibilité locale pour le type donné de grandeur ou de position mesurée.

16. Méthode de mesure d'une grandeur physique et/ou de mesure d'une position avec un fil magnétique bistable selon la revendication 14, **caractérisé en ce que** lors de l'évaluation du signal reçu en réponse du fil (1) magnétique bistable, la somme du temps (T1) du maximum local et du temps (T2) du minimum local du signal est évaluée, avantageusement sans tenir compte de l'amplitude absolue du signal.

17. Méthode de mesure d'une grandeur physique et/ou de mesure d'une position avec un fil magnétique bistable selon la revendication 16, **caractérisé en ce que** lors de l'évaluation du signal reçu en réponse du fil (1) magnétique bistable, la différence entre le temps (T2) du minimum local et le temps (T1) du maximum local du signal est prise en compte.

18. Méthode de mesure d'une grandeur physique et/ou de mesure d'une position avec un fil magnétique bistable selon l'une quelconque des revendications 13 à 17, **caractérisé en ce que** la réponse du fil (1) magnétique bistable capturée par l'élément (3) de détectionest évaluée dans l'unité (4) de commande.
